# EUROPEAN PATENT SPECIFICATION

(11) **EP 2 292 103 B1**
(45) Date of publication and mention of the grant of the patent: **07.03.2012**
(21) Application number: 09011503.1
(22) Date of filing: 08.09.2009
(51) Int. Cl.: A23L 1/222, A23L 1/236, A23L 1/30, A23L 2/02, A23L 2/60, A23L 1/22

(54) **Sweetening composition**
Süßungszusammensetzung
Composition d'édulcorant

(43) Date of publication of application: 09.03.2011
(73) Proprietor: RUDOLF WILD GmbH & CO. KG, 69214 Eppelheim (DE)
(72) Inventor: Wild, Hans-Peter, 69214 Eppelheim (DE); Salom, Rafael, 46250 L'Alcudia, Valencia (ES); Sattler, Robert, 68723 Oftersheim (DE)
(74) Representative: Grünecker, Kinkeldey, Stockmair & Schwanhäusser

(56) References cited:
- EP-A- 2 002 734
- WO-A-2007/061795
- US-A1- 2007 116 840
- DATABASE WPI Week 200666 Thomson Scientific, London, GB; AN 2006-631780 XP002557173 & JP 2006 238828 A (OGAWA KORYO KK) 14 September 2006 (2006-09-14)

## Description

The present invention is directed to a sweetening composition comprising a steviol glycoside and a natural masking agent.

Obesity is an increasing problem in industrialized countries and is associated with many diseases, particularly heart disease, type 2 diabetes, breathing difficulties during sleep, certain types of cancer, and osteoarthritis. Obesity is most commonly caused by a combination of excessive dietary calories with other indications such as a lack of physical activity or genetic susceptibility.

In order to contribute to the human health it is desirable that foodstuff has a low glycaemic index (GI) within a balanced diet and a healthy lifestyle. The GI was first introduced in 1981 and is a classification of the blood glucose raising potential of carbohydrate foods. It is defined as the incremental area under the blood glucose curve of a 50 g carbohydrate portion of a test food expressed as a percentage of the response to 50 g of a reference food taken by the same subject on a different day.

EP-A-2002734 discloses a composition comprising carbohydrates obtainable from carob and from at least one further fruit, preferably a Mediterranean fruit. This composition has a low glycaemic index.

In order to avoid the intake of excessive dietary calories and thereby to address the growing problem of obesity, the food industry offers more and more products with a low glycaemic index and additionally reduced calories. These products may contain a sugar substitute that duplicates the effect of sugar in taste, but usually has less food energy.

The majority of sugar substitutes approved for food use are artificially-synthesized compounds. Those of the substitutes that are not natural are, in general, referred to as artificial sweeteners. Commonly employed artificial sweeteners are aspartame, acesulfame-K, sodium cyclamate, sodium saccharine, or sucralose.

The sensation of sweetness caused by these artificial sweeteners (the "sweetness profile") is sometimes notably different from sucrose, so they are often used in complex mixtures that achieve the most natural sweet sensation. An improvement in sweet sensation is achieved if the different sweeteners have different off-tastes.

However, there is some ongoing controversy over whether this artificial sweetener usage poses health risks.

Therefore, it is desirable to use natural sweeteners. Known natural sweeteners include sorbitol and xylitol, which are found in berries, fruit, vegetables, and mushrooms. Some additional non-sugar sweeteners are polyols, also known as sugar alcohols and classified as carbohydrates. These are, in general, less sweet than sucrose, but have similar bulk properties and can be used in a wide range of food products.

Steviol glycosides are known as a natural high-intensity sweetener and are used as traditional medicine since centuries. A high-intensity sweetener is a compound with sweetness that is many times that of sucrose. As a result, much less sweetener is required, and energy contribution is often negligible. Steviol glycosides are naturally occurring compounds and can be extracted from *Stevia rebaudiana.* The four major steviol glycosides found in the stevia plant tissue are stevioside, rebaudioside A, rebaudioside C and dulcoside A. However, steviol glycosides are known to have a bitter, metallic aftertaste.

WO 2007/061802 discloses a functional sweetener composition comprising a hydration product, a high-potency sweetener and a sweet taste improving composition. The high-potency sweetener can be a steviol glycoside such as rebaudioside A.

US 2007/0116840 discloses a functional sweetener composition comprising at least one weight management agent, at least one high potency sweetener and a sweet taste improving composition.

Rebaudioside A is the least bitter and most sweet of the steviol glycosides. Its sweetness is approximately 350 to 450 higher than sucrose. However, for all steviol glycosides it is required to mask the bitter and metallic aftertaste when using steviol glycosides in foodstuff.

The problem underlying the present invention is to provide a sweetening composition which has a pleasant taste, is healthy, contains natural components and allows for a significant reduction in calories.

Said problem is solved by a sweetening composition comprising:
a) a steviol glycoside, and
b) a natural masking agent, said natural masking agent being obtainable from carob and a citrus fruit by a process comprising the steps of:
   i) obtaining an aqueous extract from carob;
   ii) obtaining an aqueous extract from a citrus fruit;
   iii) mixing the aqueous extracts from steps i) and ii);
   iv) fractionating the product of step iii) to obtain a first fraction comprising polysaccharides, polyols, proteins, free amino acids, fibers, fats and polyphenols; a second fraction of ionized molecules comprising minerals and organic acids; and a third fraction comprising monosaccharides and disaccharides; and
   v) mixing the first fraction and the second fraction.

In a preferred embodiment in combination with any of the above or below embodiments, the steviol glycoside is rebaudiosid A, rebaudiosid B, rebaudiosid C, rebaudioside D, rebaudioside E, stevioside, and/or dulcoside A, more preferably rebaudioside A.

In a preferred embodiment in combination with any of the above or below embodiments, the steviol glycoside is rebaudiosid A in combination with rebaudiosid B, rebaudiosid C, rebaudioside D, rebaudioside E, stevioside, and/or dulcoside A

In a preferred embodiment in combination with any of the above or below embodiments, the steviol glycoside has a purity of at least 60% (w/w), more preferable of at least 80% (w/w) and most preferable of at least 95% (w/w), wherein the percentage is based on the dry matter.

The carob tree, *Ceratonia siliqua,* is a species of flowering evergreen shrub or tree in the pea family, Fabaceae, that is native to the Mediterranean region. The fruit of the carob tree is an indehiscent pod, elongated, compressed, straight or curved, thickened at the sutures, 10-30 cm long, 1.5-3.5 cm wide and about 1 cm thick. Pods are brown with a wrinkled surface and are leathery when ripe. The pulp comprises an outer leathery layer (pericarp) and softer inner region (mesocarp).

In a preferred embodiment in combination with any of the above or below embodiments, the aqueous extract from carob in step i) is an aqueous extract from carob pulp.

In a preferred embodiment in combination with any of the above or below embodiments, the aqueous extract from carob in step i) has 14-20°Brix, more preferably 16-18°Brix.

The °Brix as used herein is measured using the industrial standard IFU 1 (IFU 8).

Citrus is a genus of flowering plants in the family Rutaceae, originating in tropical and subtropical southeast regions of the world. Citrus fruits are notable for their fragrance, partly due to flavonoids and limonoids contained in the rind, and most are juice-laden. The juice contains a high quantity of citric acid giving them their characteristic sharp flavour.

In a preferred embodiment in combination with any of the above or below embodiments, the citrus fruit is selected from the group consisting of orange, tangerine, grapefruit, clementine, lemon and lime, more preferably orange.

In a preferred embodiment in combination with any of the above or below embodiments, the aqueous extract from in step ii) has 2-6°Brix, more preferably 3-5°Brix. Preferably, the aqueous extract from step ii), in particular the aqueous extract from orange in step ii), is concentrated to 60-65°Brix.

The aqueous extract from carob can be obtained as described under item A.1 of EP-A-2002734 and the aqueous extract from citrus fruit can be obtained as described for orange under item A.2 of EP-A-2002734.

In a preferred embodiment in combination with any of the above or below embodiments, the aqueous extract from step i) and the aqueous extract from step ii) are mixed in a ratio of 55-80% (w/w) extract from step i) and 20-45% (w/w) extract from step ii).

In a preferred embodiment in combination with any of the above or below embodiments, the product of step iii) has 34-53°Brix.

In a preferred embodiment in combination with any of the above or below embodiments, the product of step iii) is heated to 50-60°C before being fractionated in step iv).

In a preferred embodiment in combination with any of the above or below embodiments, the fractionating in step iv) comprises fractionating on a cation exchange resin. More preferably, the cation exchange resin is a weakly reticulated cation exchange resin, which is activated but not in the hydrogen form. In a preferred embodiment in combination with any of the above or below embodiments, the cation exchange resin is in the sodium or potassium form. In a preferred embodiment in combination with any of the above or below embodiments, the cation exchange resin is a strong acid cation resin, more preferably the resin is a polystyrene having sulfonic acid groups, e.g. available under the tradename Diaion UBK 530® or UBK 555® (Resindion - Milan).

In a preferred embodiment in combination with any of the above or below embodiments, the eluent in step iv) is water, in particular osmotised water. The term "osmotised water" as used herein designates a reverse osmosis water with a maximum conductivity of 10 MicroSiemens/cm at 25°C.

In a preferred embodiment in combination with any of the above or below embodiments, the fractionating in step iv) comprises applying the product of step iii) to the cation exchange resin. Thereupon, a first fraction comprising polysaccharides, polyols, proteins, free amino acids, fibers, fats and polyphenols is collected. Preferably, the first fraction has a dark and intensive brownish-reddish colour, and 0.5-1.5°Brix. The collection of the first fraction is stopped when the eluent leaving the resin is colourless.

In a preferred embodiment in combination with any of the above or below embodiments, water, more preferably osmotised water, is applied to the cation exchange resin after collecting the first fraction. Thereupon, a second fraction of ionized molecules comprising minerals and organic acids is collected. This fraction is preferably colourless and has about 4-6°Brix. The collection of the second fraction is stopped when the eluent leaving the column is coloured.

In a preferred embodiment in combination with any of the above or below embodiments, a subsequent intermediate fraction is re-circulated onto the cation exchange resin or discarded, more preferably re-circulated onto the cation exchange resin, after collecting the second fraction. Preferably, this intermediate fraction is clear, has a pale brownish colour and <0.3°Brix. The end of the intermediate fraction is indicated by the appearance of a colourless fraction having 15-30°Brix.

In a preferred embodiment in combination with any of the above or below embodiments, after re-circulating or discarding the intermediate fraction, a third fraction is collected. Preferably, this third fraction comprising monosaccharides and disaccharides, is colourless and has 15-30°Brix. The collection of the third fraction is preferably stopped when the eluent leaving the resin has <15°Brix.

In a preferred embodiment in combination with any of the above or below embodiments, the product of step v) is further concentrated to have 15-25°Brix. Preferably, a plate heat exchanger under vacuum conditions is used for this concentration step.

In a preferred embodiment in combination with any of the above or below embodiments, the product of step v) has a pH of 4-7, preferably a pH of 5-6.

In a preferred embodiment in combination with any of the above or below embodiments, the product of step v) is subsequently filtered, preferably using a metallic fine filter having a screen mesh size of less than 10 µm.

In a preferred embodiment in combination with any of the above or below embodiments, the weight ratio of steviol gylcoside (component a) to natural masking agent (component b) is from 10:1 to 1:1; more preferably from 7:1 to 2:1, in particular from 4:1 to 3:1.

In a preferred embodiment in combination with any of the above or below embodiments, the product of step v) is further formulated with L-ascorbic acid (vitamin C), more preferably at a concentration of 0.5-0.9 g/l.

In a preferred embodiment in combination with any of the above or below embodiments, the product of step v) is further formulated with a food carrier. The food carrier is preferably selected from the group consisting of arabic gum, maltodextrin, beta-cyclodextrin or modified starch, more preferably arabic gum. The modified starch is selected from acid-treated starch, alkaline-treated starch, bleached starch, oxidized starch, enzyme-treated starch, acetylated starch and/or acetylated oxidized starch, preferably acid-treated starch.

In a preferred embodiment in combination with any of the above or below embodiments, the content of food carrier in the natural masking agent ranges from 25-45% (w/w), preferably from 30-40% (w/w), of the total solids.

In a preferred embodiment in combination with any of the above or below embodiments, the product of step v) is subsequently dried, more preferably spray dried, e.g. at a temperature of 90-100°C, to yield the natural masking agent.

In a preferred embodiment in combination with any of the above or below embodiments, the natural masking agent comprises 4.5-6.4% (w/w), preferably 5-5.9% (w/w), proteins.

In a preferred embodiment in combination with any of the above or below embodiments, the natural masking agent comprises 6.2-9.6% (w/w), preferably 7.2-8.6% (w/w), free amino acids.

In a preferred embodiment in combination with any of the above or below embodiments, the natural masking agent comprises 32-37% (w/w), preferably 33-36% (w/w), fibers.

In a preferred embodiment in combination with any of the above or below embodiments, the natural masking agent comprises <0.1% (w/w) insoluble fibers.

In a preferred embodiment in combination with any of the above or below embodiments, the natural masking agent comprises 37-45% (w/w), preferably 39-43% (w/w), minerals.

In a preferred embodiment in combination with any of the above or below embodiments, the natural masking agent comprises 2.4-3.1 (w/w), preferably 2.6-2.9 (w/w), organic acids.

In a preferred embodiment in combination with any of the above or below embodiments, the natural masking agent comprises 0.65-1.2% (w/w), preferably 0.85-1.0% (w/w), volatile organic acids.

In a preferred embodiment in combination with any of the above or below embodiments, the natural masking agent comprises <0.1% (w/w) fats.

In a preferred embodiment in combination with any of the above or below embodiments, the natural masking agent comprises 1.9-2.3 % (w/w), preferably 2.0-2.2 % (w/w), polyphenols.

In a preferred embodiment in combination with any of the above or below embodiments, the natural masking agent comprises 0.1-0.3% (w/w), preferably about 0.2% (w/w), flavonoids, preferably citrus flavonoids, as polyphenols.

In a preferred embodiment in combination with any of the above or below embodiments, the natural masking agent comprises 4.5-6.4% (w/w) proteins, 6.2-9.6% (w/w) free amino acids, 32-37% (w/w) fibers, 37-45% (w/w) minerals, 2.4-3.1 (w/w) organic acids, <0.1% (w/w) fats and 1.9-2.3 % (w/w) polyphenols.

The natural masking agent has preferably one or more, most preferably all of the following characteristics:
The moisture is preferably at most 10% (w/w).
The pH (solution in water with 1% w/v) is preferably 5.0 to 8.0.
The total acidity is preferably at most 400 mEq/kg.
The specific gravity is preferably 0.4-0.6 g/ml.
The amino-nitrogen content is preferably 1.1-1.4 g/100g.
The natural masking agent is preferably highly hygroscopic and has a clear pale brown colour.

In a preferred embodiment in combination with any of the above or below embodiments, the natural masking agent is soluble in water in a pH range of 2-10.

In a preferred embodiment in combination with any of the above or below embodiments, the sweetening composition of the present invention contains an artificial sweetener selected from aspartame, acesulfame, cyclamate, sucralose, neo-hesperidine, and/or thaumatin, more preferably the sweetening composition consists of natural components.

In a preferred embodiment in combination with any of the above or below embodiments, the sweetening composition is used for the preparation of foodstuff. The foodstuff is preferably a beverage, confectionery, a bakery product, a dairy product, ice cream or chocolate.

In a preferred embodiment in combination with any of the above or below embodiments, the foodstuff contains additional carbohydrates, preferably selected from glucose, fructose, saccharose and/or polyalcohols. More preferably, the foodstuff contains carbohydrates in the form of a natural fruit concentrate obtainable as described under items A.1 to B.4 of EP-A-2002734, wherein the carbohydrates preferably contain 18-28% (w/w) of glucose, 30-44% (w/w) of fructose, 16-33% (w/w) of saccharose, 7-13% (w/w) of polyalcohols, and/or 1-3% (w/w) of other sugars, wherein the percentages are based on the dry matter. Such natural fruit concentrate is commercially available under the tradename Fruit Up® from Rudolf Wild GmbH & Co. KG.

In a preferred embodiment in combination with any of the above or below embodiments, the foodstuff, more preferably a beverage, comprises citric acid, preferably 0-9% (w/w) citric acid.

A blend of rebaudioside A with natural fruit concentrates allows for a significant reduction in calories. However, sensory tests show that such blend in comparison with sugar has a strong bitter, metallic aftertaste and artificial sweetness. Due to this fact, sweetener systems containing stevia glycosides need a suitable masking agent.

It has surprisingly been found that by using the sweetening composition of the present invention, the overall sweetness profile of foodstuff can be significantly improved.

The natural masking agent used in this invention overcomes undesired off-notes of steviol glycosides in food and beverages due to its specific natural flavour. It masks negative sensorial aspects of steviol glycosides such as rebaudioside A.

The following examples further describe the invention.

### Example 1

A natural masking agent was prepared as follows:

1000 kg of carob pulp were extracted by water-diffusion with 3000 I of water (50°C) to yield an aqueous extract of carob having 17°Brix. This extract was decanted and centrifuged in a decanter centrifuge and pasteurized. Finally the extract was clarified by means of ultrafiltration in order to give a clear carob extract having 15-16°Brix.

1000 kg of orange pulp were subjected to a milling and grinding step and subsequently extracted by mixing with 2500 I of water. This mixture was pressed to yield an extract of orange pulp having 4°Brix which was decanted and centrifuged in a decanter centrifuge and pasteurized. Finally the extract was clarified by means of ultrafiltration in order to give a clear orange extract having 3°Brix. This extract was concentrated on a plate heat exchanger under vacuum to 65°Brix.

The clear carob extract and the clear orange extract concentrate were mixed in a ratio of 60 % (w/w) of clear carob extract and 40 % (w/w) of clear orange extract concentrate and had 36-37°Brix.

This mixture was heated to 55°C and subsequently fractionated by applying the mixture on a column filled with the cation exchange resin Diaion UBK 555® (Resindion). The column had a diameter of 0.9 m and a height of 8 m resulting in a resin bed a volume of approximately 4500 I.

The first collected fraction had a dark and intensive brownish-reddish colour and 0.5-1.5°Brix.

Reverse osmosis water was entered into the system as eluent and subsequently a second fraction was collected. This second fraction was colorless and had 4-6°Brix.

The first and second fraction were mixed and concentrated on a plate heat exchanger under vacuum to about 20°Brix. L-ascorbic acid was added to the mixture to give a final concentration of 0.7 g/l. Arabic gum was added to the mixture to be present in a concentration of 35 % based on the total amount of solids.

The concentrated mixture was subsequently spray dried at a temperature of about 95°C to yield a natural masking agent having the following characteristics:

Constituents based on the extract of carob and orange in powder form: about 5.5 % (w/w) proteins, about 7.9 % (w/w) free amino acids, about 35 % (w/w) fibers, about 41 % (w/w) minerals, about 2.8 % (w/w) organic acids, < 0.1 % (w/w) fats, about 2.1 % (w/w) polyphenols and about 5,6 % water.

Content of Arabic gum based on total amount of solids: about 35 % (w/w).

The moisture was < 10 % (w/w).
The pH (solution in water with 1 % w/v) was about 6.5.
The total acidity was < 400 mEq/kg.
The specific gravity was about 0.5 g/ml.

### Example 2

A test panel of 11 sensory trained individuals (age from 20 to 50, 9 women, two men) examined qualitative and quantitative differences between a sweetened sample using the sweetening composition of the invention containing the natural masking agent of Example 1 and a comparative sample lacking the natural masking agent. Both samples contained additionally Fruit Up® (commercially available from Rudolf Wild GmbH & Co. KG) in a concentration of 40g/l. Fruit Up®, citric acid and rebaudioside A were blended as shown in Table 1 to obtain a sweetening intensity of about 10% sugar equivalent.

All ingredients were dissolved in demineralised water and tasted at a temperature of 20°C. Samples were randomized and tasted twice in two separate sessions.

**Table 1: Composition of samples**

| | Rebaudioside A | Natural masking agent | Fruit Up® | Citric acid, anhydrous |
|---|---|---|---|---|
| Comparative | 0.18 g/l | No | 40 g/l | 1.2 g/l |
| Inventive | 0.18 g/l | 0.05 g/l | 40 g/l | 1.2 g/l |

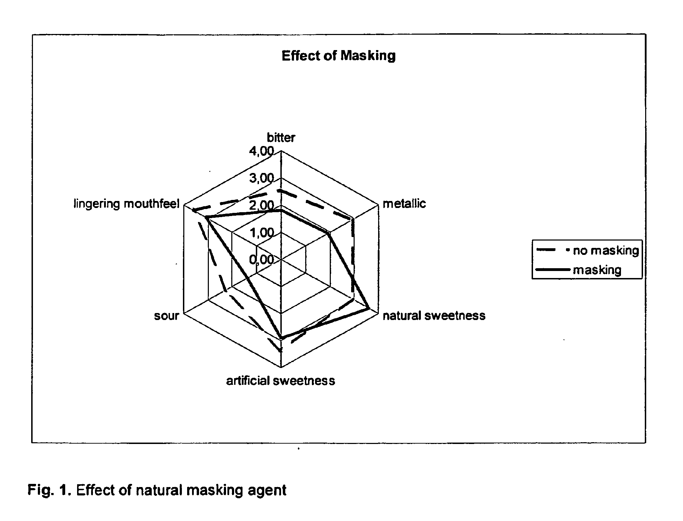

The effect of masking is shown in Figure 1.

### Test Design:

Each of the individuals of the test panel evaluated 50 ml of the sample of the present invention and of the comparative sample for the following quality characteristics:

| | No masking (comparative) | Masking (inventive) |
|---|---|---|
| Total lntensity | 4.09 | 4.18 |
| Bitter intensity* | 2.55 | 1.82 |
| Metallic intensity* | 2.91 | 1.91 |
| Natural sweetness* | 2.91 | 3.64 |
| Artificial sweetness* | 3.36 | 2.91 |
| sour* | 2.27 | 1.36 |
| drying mouthfeel | 3.00 | 2.64 |
| Lingering mouthfeel* | 3.64 | 3.09 |
| sweet aftertaste | 3.27 | 3.45 |
| bitter aftertaste | 1.73 | 1.27 |
| metallic aftertaste | 2.55 | 2.09 |

The ranking scale reaches from 0 (no effect) to 5 (maximum intensity of attribute). Thus, a total intensity of 0 indicates no total intensity and a total intensity of 5 indicates a very strong total intensity. A bitter intensity of 0 indicates no bitter intensity and a bitter intensity of 5 indicates a very strong bitter intensity. A metallic intensity of 0 indicates no metallic intensity and a metallic intensity of 5 indicates a very strong metallic intensity. A natural sweetness of 0 indicates no natural sweetness and a natural sweetness of 5 indicates a very strong natural sweetness. An artificial sweetness of 0 indicates no artificial sweetness and an artificial sweetness of 5 indicates a very strong artificial sweetness. A sour taste of 0 indicates no sour taste and a sour taste of 5 indicates a very strong sour taste. A drying mouthfeel of 0 indicates no drying mouthfeel and a drying mouthfeel of 5 indicates a very strong drying mouthfeel. A lingering mouthfeel of 0 indicates no lingering mouthfeel and a lingering mouthfeel of 5 indicates a very strong lingering mouthfeel. A sweet aftertaste of 0 indicates no sweet aftertaste and a sweet aftertaste of 5 indicates a very strong sweet aftertaste. A bitter aftertaste of 0 indicates no bitter aftertaste and a bitter aftertaste of 5 indicates a very strong bitter aftertaste. A metallic aftertaste of 0 indicates no metallic aftertaste and a metallic aftertaste of 5 indicates a very strong metallic aftertaste.

Attributes with * show a significant difference between samples with and without masking. For example, the attribute "bitter" ranks without the masking agent at 2.55, with masking agent at 1.82, which means that the sample is considerably less bitter. Another significant improvement is shown for the attribute "natural sweetness" which is increased from 2.91 to 3.64 with the masking agent. The most important improvement is a significant reduction of the "metallic intensity", which is one of the most unpleasant off-notes in products containing artificial sweeteners. As the attributes signed with * are important for the sensorial quality of a sweetened product, it can be concluded that the masking agent significantly improves the quality of the samples.

## Claims

1. A sweetening composition comprising:
a) a steviol glycoside, and
b) a natural masking agent, said natural masking agent being obtainable from carob and a citrus fruit by a process comprising the steps of:
i) obtaining an aqueous extract from carob;
ii) obtaining an aqueous extract from a citrus fruit;
iii) mixing the aqueous extracts from steps i) and ii);
iv) fractionating the product of step iii) to obtain a first fraction comprising polysaccharides, polyols, proteins, free amino acids, fibers, fats and polyphenols; a second fraction of ionized molecules comprising minerals and organic acids; and a third fraction comprising monosaccharides and disaccharides; and
v) mixing the first fraction and the second fraction.

2. The composition of claim 1, wherein the steviol glycoside is Rebaudioside A.

3. The composition of claim 1 or 2, wherein the aqueous extract of carob has 14-20°Brix.

4. The composition of any of claims 1 to 3, wherein the citrus fruit is orange.

5. The composition of claim 4, wherein the aqueous extract from orange has 2-6°Brix.

6. The composition of any of claims 1 to 5, wherein the product of step iii) has 34-53°Brix.

7. The composition of any of claims 1 to 6, wherein the fractionating in step iv) comprises fractionating on a cation exchange resin which is activated but not in the hydrogen form.

8. The composition of claim 7, wherein the cation exchange resin is in the sodium or potassium form.

9. The composition of any of claims 1 to 8, wherein the product of step v) is further concentrated to 15-25°Brix.

10. The composition of any of claims 1 to 9, wherein the product of step v) has a pH of 4-7.

11. The composition of any of claims 1 to 10, wherein the product of step v) is further formulated with a food carrier.

12. The composition of any of claims 1 to 11, wherein the product of step v) is subsequently spray dried.

13. Use of the composition of any of claims 1 to 12 for the preparation of foodstuff.

14. The use according to claim 13, wherein the foodstuff is a beverage, confectionery, a bakery product, a dairy product, ice cream or chocolate.

## Patentansprüche

1. Süßungszusammensetzung, umfassend:
a) ein Steviolglycosid und
b) ein natürliches Maskierungsmittel, wobei das natürliche Maskierungsmittel aus Johannisbrot und einer Zitrusfrucht erhältlich ist durch ein Verfahren, umfassend die Schritte:
i) das Erhalten eines wässrigen Extrakts aus Johannisbrot;
ii) das Erhalten eines wässrigen Extrakts aus einer Zitrusfrucht;
iii) das Mischen der wässrigen Extrakte aus den Schritten i) und ii);
iv) das Fraktionieren des Produkts von Schritt iii), um eine erste Fraktion, die Polysaccharide, Polyole, Proteine, freie Aminosäuren, Fasern, Fette und Polyphenole umfasst; eine zweite Fraktion von ionisierten Molekülen, die Mineralien und organische Säuren umfasst; und eine dritte Fraktion, die Monosaccharide und Disaccharide umfasst, zu erhalten; und
v) das Mischen der ersten Fraktion und der zweiten Fraktion.

2. Zusammensetzung nach Anspruch 1, wobei das Steviolglycosid Rebaudiosid A ist.

3. Zusammensetzung nach Anspruch 1 oder 2, wobei der wässrige Extrakt von Johannisbrot 14-20° Brix aufweist.

4. Zusammensetzung nach einem der Ansprüche 1 bis 3, wobei es sich bei der Zitrusfrucht um Orange handelt.

5. Zusammensetzung nach Anspruch 4, wobei der wässrige Extrakt aus Orange 2-6° Brix aufweist.

6. Zusammensetzung nach einem der Ansprüche 1 bis 5, wobei das Produkt von Schritt iii) 34-53° Brix aufweist.

7. Zusammensetzung nach einem der Ansprüche 1 bis 6, wobei das Fraktionieren in Schritt iv) das Fraktionieren an einem Kationenaustauschharz umfasst, welches aktiviert ist, aber nicht in der Wasserstoffform vorliegt.

8. Zusammensetzung nach Anspruch 7, wobei das Kationenaustauschharz in der Natrium- oder Kaliumform vorliegt.

9. Zusammensetzung nach einem der Anspruche 1 bis 8, wobei das Produkt von Schritt v) außerdem auf 15-25° Brix konzentriert ist.

10. Zusammensetzung nach einem der Ansprüche 1 bis 9, wobei das Produkt von Schritt v) einen pH-Wert von 4-7 aufweist.

11. Zusammensetzung nach einem der Ansprüche 1 bis 10, wobei das Produkt von Schritt v) außerdem mit einem Nahrungsmittelträger formuliert ist.

12. Zusammensetzung nach einem der Ansprüche 1 bis 11, wobei das Produkt von Schritt v) anschließend sprühgetrocknet wird.

13. Verwendung der Zusammensetzung nach einem der Ansprüche 1 bis 12 für die Herstellung eines Nahrungsmittels.

14. Verwendung nach Anspruch 13, wobei es sich bei dem Nahrungsmittel um ein Getränk, Süßwaren, eine Backware bzw. ein Bäckereiprodukt, ein Molkereiprodukt, Speiseeis oder Schokolade handelt.

## Revendications

1. Composition édulcorante comprenant :
a) un glycoside de stéviol, et
b) un agent de masquage naturel, ledit agent de masquage naturel pouvant être obtenu à partir de caroube et d'un agrume par un procédé comprenant les étapes consistant à :
i) obtenir un extrait aqueux de caroube ;
ii) obtenir un extrait aqueux d'un agrume ;
iii) mélanger les extraits aqueux des étapes i) et ii) ;
iv) fractionner le produit de l'étape iii) pour obtenir une première fraction comprenant des polysaccharides, des polyols, des protéines, des acides aminés libres, des fibres, des graisses et des polyphénols ; une deuxième fraction de molécules ionisées comprenant des minéraux et des acides organiques ; et une troisième fraction comprenant des monosaccharides et des disaccharides ; et
v) mélanger la première fraction et la deuxième fraction.

2. Composition selon la revendication 1, dans laquelle le glycoside de stéviol est le rébaudioside A.

3. Composition selon la revendication 1 ou 2, dans laquelle l'extrait aqueux de caroube a un degré Brix de 14 à 20.

4. Composition selon l'une quelconque des revendications 1 à 3, dans laquelle l'agrume est l'orange.

5. Composition selon la revendication 4, dans laquelle l'extrait aqueux d'orange a un degré Brix de 2 à 6.

6. Composition selon l'une quelconque des revendications 1 à 5, dans laquelle le produit de l'étape iii) a un degré Brix de 34 à 53.

7. Composition selon l'une quelconque des revendications 1 à 6, dans laquelle le fractionnement dans l'étape iv) comprend un fractionnement sur une résine échangeuse de cations qui est activée mais pas sous la forme hydrogène.

8. Composition selon la revendication 7, dans laquelle la résine échangeuse de cations est sous la forme sodium ou potassium.

9. Composition selon l'une quelconque des revendications 1 à 8, dans laquelle le produit de l'étape v) est en outre concentré à un degré Brix de 15 à 25.

10. Composition selon l'une quelconque des revendications 1 à 9, dans laquelle le produit de l'étape v) a un pH de 4 à 7.

11. Composition selon l'une quelconque des revendications 1 à 10, dans laquelle le produit de l'étape v) est en outre formulé avec un support alimentaire.

12. Composition selon l'une quelconque des revendications 1 à 11, dans laquelle le produit de l'étape v) est ensuite séché par pulvérisation.

13. Utilisation de la composition de l'une quelconque des revendications 1 à 12 pour la préparation d'un produit alimentaire.

14. Utilisation selon la revendication 13, dans laquelle le produit alimentaire est une boisson, une confiserie, un produit de boulangerie, un produit laitier, une crème glacée ou un chocolat.
